**Europäisches Patentamt**

**European Patent Office**

**Office européen des brevets**

(19)

(11) Numéro de publication: **0 079 839**

**B1**

(12)

# FASCICULE DE BREVET EUROPÉEN

(45) Date de publication du fascicule du brevet:
23.07.86

(51) Int. Cl.⁴: **B 60 R 13/06**

(21) Numéro de dépôt: **82402087.9**

(22) Date de dépôt: **16.11.82**

(54) Joint de pare-brise.

(30) Priorité: **18.11.81 FR 8121648**

(43) Date de publication de la demande:
**25.05.83 Bulletin 83/21**

(45) Mention de la délivrance du brevet:
**23.07.86 Bulletin 86/30**

(84) Etats contractants désignés:
**DE GB IT**

(56) Documents cité:
**DE-A-2 418 815**
**FR-A-2 340 217**
**US-A-2 761 536**
**US-A-3 159 884**
**US-A-3 968 612**

(73) Titulaire: **REGIE NATIONALE DES USINES
RENAULT, Boîte postale 103 8-10 avenue Emile
Zola, F-92109 Boulogne- Billancourt (FR)**

(72) Inventeur: **Donadille, Daniel, 4, rue Brifault, F-77340
Pontault Combault (FR)**
Inventeur: **Quesnel, Marcel, 4, rue des Marais
Neron, F-28210 Nogent le Roi (FR)**

(74) Mandataire: **Chassagnon, Jean- Alain, REGIE
NATIONALE DES USINES RENAULT (S.0604),
F-92109 Boulogne- Billancourt Cedex (FR)**

EP 0 079 839 B1

La présente invention s'applique aux joints de pare-brise et à leur procédé de montage sur la baie de pare-brise d'un véhicule automobile. De tels joints sont utilisés pour la fixation étanche du pare-brise de forme galbée dans sa baie de réception à rebord périphérique.

Selon un type de montage couramment utilisé, le joint de pare-brise en un matériau élastomère dont la surface extérieure correspond à celle du rebord de la baie, est collé au rebord de la baie par un adhésif tel qu'une colle par application sur le rebord de la baie du joint portant le pare-brise. En effet, la fixation d'une vitre telle qu'un pare-brise ou une lunette dans une baie de véchicule peut s'effectuer généralement à l'aide d'un joint en élastomère à l'aide de deux méthodes très différents. Selon une première méthode très utilisée jusque là en Europe pour les vitres trempées relativement épaisses, le joint vient envelopper la périphérie de la vitre en préparation de montage puis cet ensemble est chaussé sur la tôle du rebord de la baie par tirage d'une ficelle placée au préalable dans une rainure du joint pour en assurer la rigidité locale au montage sur la feuillure du rebord. Selon une deuxième méthode utilisée notamment pour le montage des vitres en verre feuilleté, on interpose entre le rebord de la baie et un joint en élastomère mince chaussé sur la vitre, ou bien directement à la périphérie de la vitre, une colle à haute performance, d'adhérence et de résistance. Cette fixation collée garantit une très bonne étanchéité et fait participer la vitre à la rigidification de la baie, et de ce fait, augmente la rigidification de l'ensemble. Suivant le document US-A-3.968.612, correspondant au préambule de la revendication 1, cette fixation collée est préparée, avant montage de l'ensemble du pare-brise, par un outillage spécifique comportant un encadrement avec des canaux d'alimentation. Cet outillage est appliqué sur le joint pour l'alimenter en colle, puis il est retiré avant montage de pare-brise sur le véchicule.

Les deux modes de fixation d'une vitre sur le rebord de sa baie ouverte ne satisfont pas toutes les exigences actuelles des véhicules automobiles en matière d'étanchéiré, de fiabilité dans le temps et surtout de sécurité en cas d'accident telles que définies en particulier par les normes américaines appliquées à l'industrie automobile. Selon la première méthode de fixation de pare-brise consistant à chausser le joint portant le pare-brise, sur la feuillure du rebord de la baie, des défauts d'étanchéité à l'eau apparaissent généralement à l'usage par suite de la diminution de l'élastomère et par voie de conséquence de son serrage sur la feuillure du rebord. L'étanchéité ne peut souvent être restaurée à titre temporaire qu'en interposant une colle entre le joint et le rebord. Un autre inconvénient important de cette méthode de fixation de pare-brise réside dans la faible résistance du pare-brise à l'arrachement à la suite d'un choc frappé de l'intérieur du véhicule. Ainsi, le pare-brise s'arrache de sa baie au cours d'un choc du véhicule sur un obstacle sous la seule action de son inertie et à plus forte raison sous la poussée des passagers du véhicule qui se trouvent dans certains accidents littéralement scalpés à travers l'ouverture de la baie à bords relativement coupants. A la suite de ces défaillances, la première méthode de fixation de pare-brise très utilisée pour les vitres épaisses en verre trempé et relativement facile à mettre en oeuvre pour la montée d'un nouveau pare-brise après casse de celui-ci, est proscrite par certaines administrations et ne peut pratiquement plus être utilisée pour les pare-brise modernes en verre feuilleté de faible épaisseur et/ou d'épaisseur variable.

La seconde méthode de fixation par collage de la vitre sur le rebord de la baie, en dehors d'un prix de revient relativement élevé du en particulier aux conditions de séchage de la colle, présente divers inconvénients pour les constructeurs et les utilisateurs de véhicules automobiles. Cette méthode rend difficile la fixation d'enjoliveurs du rebord de pare-brise ainsi que la réparation des pare-brise cassés par suite d'un accident. Un autre inconvénient des pare-brise collés s'est révélé récemment à la suite de l'usage de produits de nettoyage des vitres qui attaquent la colle spéciale utilisée pour la fixation du pare-brise sur le rebord de la baie.

L'un des buts de la présente invention est précisément de pallier les difficultés qui viennent d'être explicitées pour la deuxième méthode de fixation et de proposer un joint de fixation de pare-brise et une méthode d'utilisation de ce joint que possèdent les avantages des deux méthodes de fixation connues c'est-à-dire qui permettent un montage du pare-brise qui reeste étanche dans le temps qui soit économique et rapide à mettre en oeuvre même pour les opérations de réparation et qui s'adapte aussi bien aux vitres épaisses qu'aux vitres en verre feuilleté.

A cet effet, selon l'invention, le joint de fixation et d'étanchéité d'une plaque, en particulier du pare-brise d'un véhicule automobile, dans sa baie de réception à rebord périphérique, du type dans lequel le joint en matériau élastomère dont la surface extérieure correspond à celle du rebord de la bie, est collé au rebord de la baie par un adhésif approprié lorsque le joint et le pare-brise qu'il porte sont appliqués sur le rebord de la baie, ledit joint comportant sur toute sa péruphérie une rainure de pare-brise qui vient s'engager élastiquement autour de bord périphérique de pare-brise ainsi qu'une rainure d'étanchéité et de fixation, est caractérisé en ce que ladite rainure d'étanchéité et de fixation est ouverte, en position de montage de joint sur le rebord, sur l'angle formé par le rebord et la pourtour de la baie, et en ce que cette rainure est reliée par au moins un trou ou passage de remplissage à au moins un ajutage de remplissage sous pression de la rainure d'étanchéité avec une colle ou autre adhésif liquide équivalent pour le collage étanche du joint sur le rebord, pour assurer son maintien en position par rapport au rebord de la baie après séchage de l'adhésif qui est venu remplir la rainure d'étanchéité. Le pare-brise peut ainsi être présenté par montage dans sa baie entouré de son joint dont le collage assure une étanchéité et une adhérence parfaites au rebord après séchage den de l'adhésif par tout moyen convenable tel que par exemple sur la chaîne de montage, un ehauffage rayonnant ou en étuve et en réparation, un placage de durée plus longue à défaud d'un chauffage du joint. La rainure de pare-brise retient celui-ci de façon souple au montage et beaucoup plus rigide après séchage de l'adhésif.

Pour accroître la rigidité du maintien de pare-brise dans sa rainure, le fond de celle-ci est relié par au moins un passage à la rainure d'étanchéité pour permettre le remplissage par l'adhésif de l'espace resté libre entre le fond de cette rainure de pare-brise et le bord périphérique du pare-brise au moment de remplissage de la rainure d'étanchéité. La liaison entre la rainure d'étanchéité et le fond de la rainure de pare-brise peut être constituée par la dérivation du trou de remplissage ou le passage de celui-ci dans le fond de la rainure de pare-brise.

Pour améliorer l'étanchéité et l'adhérence du joint sur le rebord de la baie, il peut comporter sur toute sa périphérie une rainure complémentaire d'étanchéité et de fixation qui est, d'une part, ouverte sur la périphérie du joint au voisinage d'une face de l'angle de la section de rebord de la baie ouvert vers l'extérieur et, d'autre part, reliée à rainure d'étanchéite et/ou au trou de remplissage pour recevoir un remplissage d'adhésif au cours de remplissage de la rainure d'étanchéité.

Selon un mode de réalisation de l'invention facilitant le remplissage des rainures avec l'adhésif liquide de consistance plus ou moins pâteuse, à chaque trou ou passage de remplissage correspond au moins un évent de sortie de l'air contenu dans la ou les rainures et refoulé par le remplissage de ces rainures avec l'adhésif.

Afin de permettre d'introduire l'adhésif dans les rainures en l'obligeant à occuper tout l'escape disponible entre ces rainures et le rebord de la baie, le joint comporte sur toute sa périphérie et sur chacune des deux faces des rainures ouvertes en direction du rebord de la baie, au moins une lèvre d'étanchéité susceptible de s'appliquer sur ce rebord pour délimiter dans la rainure en coopération avec la surface de ce rebord une chambre relativement étanche et apte à retenir l'adhésif sous pression au moment de surinjections. De même, la rainure de pare-brise comporte sur chacune de ses faces en contact avec la vitre de pare-brise au moins une lèvre d'étanchéité susceptible de coopérer avec le pare-brise et le fond de la rainure de pare-brise pour délimiter une chambre de pare-brise relativement étanche et apte à retenir l'adhésif sous pression au moment de son injection.

Le procédé de fixation et d'étanchéité d'une plaque telle qu'un pare-brise de véhicule automobile dans une baie de réception à rebord périphérique, utilisant un joint périphérique fermé sur lui-même tel que celcui qui vient d'être décrit est caractérisé en ce que l'on entoure la périphérie de pare-brise par le joint en disposant le pare-brise dans la rainure de pare-brise et l'on plaque le joint sur le rebord de pare-brise pour fermer les chambres à adhésif délimitées par les rainures du joint, puis l'on introduit une canule ou un embout d'injection d'adhésif dans l'ajutage d'injection et l'on injecte par cet embout une quantité d'adhésif prédéterminée remplissant la ou les chambres à adhésif et enfin l'on maintient le joint plaqué sur le rebord de pare-brise jusqu'au séchage de l'adhésif.

D'autres buts, avantages et caractéristiques de la présente invention apparaîtront à la lecture de la description d'un mode de réalisation faite à titre non limitatif et en regard de dessin annexé où:

— la figure 1 représente en coupe un pare-brise équipé d'un joint de fixation de type connu qu'enveloppe sa périphérie;

— la figure 2 représente en coupe le joint de la figure 1 équipé du pare-brise et "chaussé" sur le rebord intérieur saillant de la feuillure du rebord de la baie;

— la figure 3 représente en coupe une autre méthode connue de fixation du pare-brise sur le rebord de la baie à l'aide d'une couche intercalaire de colle à haute résistance;

— les figures 4 à 6 représentent en coupe divers modes de réalisation du joint de fixation de pare-brise selon l'invention en position d'un pare-brise sur le rebord de sa baie;

— la figure 7 représente la section d'une forme plus élaborée du joint selon l'invention;

— la figure 8 représente en coupe le joint de la figure 7 équipé de pare-brise au moment de l'injection de l'adhésif de fixation au bord de la baie.

— la figure 9 représente le joint selon la figure 7 en position définitive sur le rebord de la baie.

En fait dans la présente description et dans les revendications auxquelles elles donnent lieu, les rainures portent une référence à deux chiffres et les chambres, formées par les dites rainures lorsque le joint est monté, portent une référence à trois chiffres, formée du nombre à deux chiffres de la rainure correspondante précédé du chiffre 1 pour les centaines.

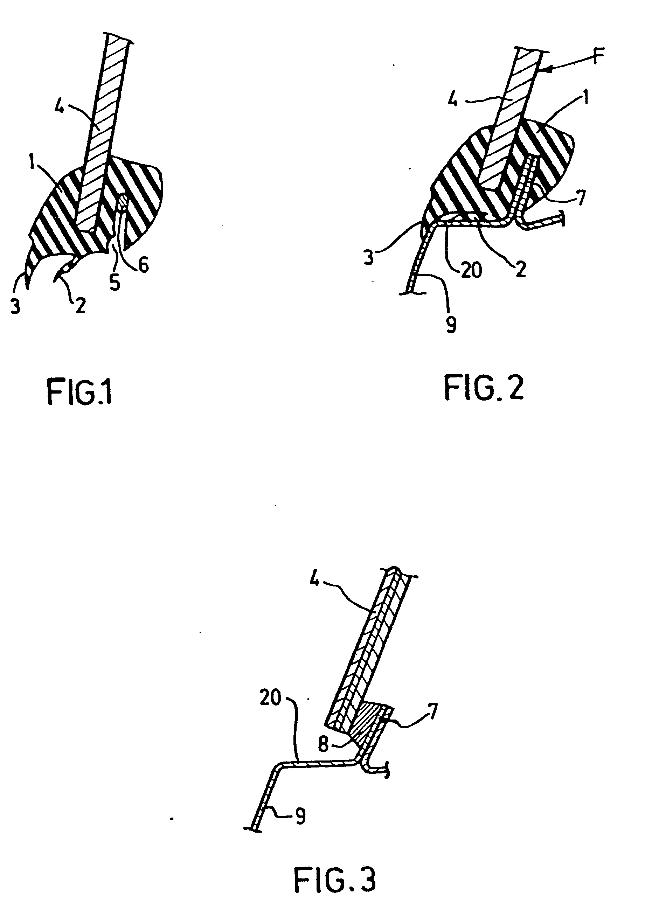

Selon l'état de la technique représenté sur les figures 1 et 2, le joint 1, en un matériau élastomère relativement résistant à la traction et aux rayons solaires pour faire face à une exposition à l'air libre de plus d'une dizaine d'années, présente une section relativement massive dotée de lèvres d'étanchéité 2 et 3, d'une nervure large et profonde dans laquelle est engagée la vitre de pare-brise 4 et d'une nervure un peu moins large 5 débouchant à la partie inférieure de la section de la figure 1.

Pour procéder au montage du joint 1 sur le rebord saillant 7 de la baie que l'on désire fermer par la vitre de pare-brise 4, on introduit préalablement une ficelle ou une cordelette 6 à section circulaire dans la rainure 5 et l'on dégage cette cordelette au fur et à mesure de l'introduction du rebord saillant 7 dans la rainure 5. Lorsque le joint 1 est complètement engagé par sa rainure 5 sur le rebord 7, la lèvre 2 est appliquée de façon étanche sur la face 20 du rebord de la baie et la lèvre 3 est rabattue sur la face 9 de la carrosserie. Le joint 1 se déchausse facilement du rebord 7 en cas de choc sur le pare-brise donné de l'intérieur du véhicule selon la flèche F. Des infiltrations d'eau finissent par se produire entre le joint 1 et le pare-brise 4 ou entre le joint 1 et la carrosserie de véhicule par suite du vieillissement de l'élastomère qui le constitue.

Pour éviter cette perte d'étanchéité dans le temps, on procède maintenant au collage du pare-brise 4, en particulier des vitres en verre feuilleté sur le rebord 7 de la baie comme représenté sur la figure 3. Il suffit pour cela d'interposer une couche de colle à haute résistance 8 entre la vitre de pare-brise 4 et le rebord 7 et d'appliquer ainsi le pare-brise 4 en direction du rebord 7 pendant le séchage de la colle. En fait, l'obtention d'une couche de colle ou d'adhésif qui soit à la fois adhérente au verre et à la carrosserie et résistante aux diverses contraintes appliquées au pare-brise, est onéreuse et exige souvent une polymérisation relativement délicate, ce qui rend encore plus difficile le remplacement d'un pare-brise après sa rupture accidentelle. On remarque également sur la figure 3 que la fixation de la vitre 4 sur le rebord 7 est relativement inesthétique et permet difficilement de loger un ruban enjoliveur du rebord saillant de la vitre.

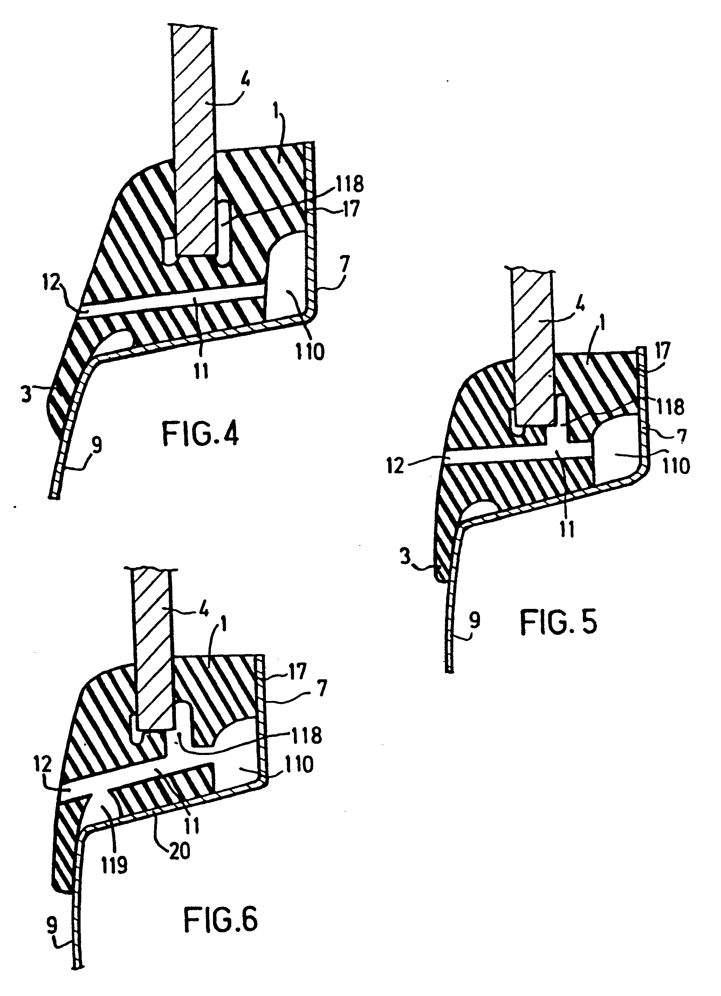

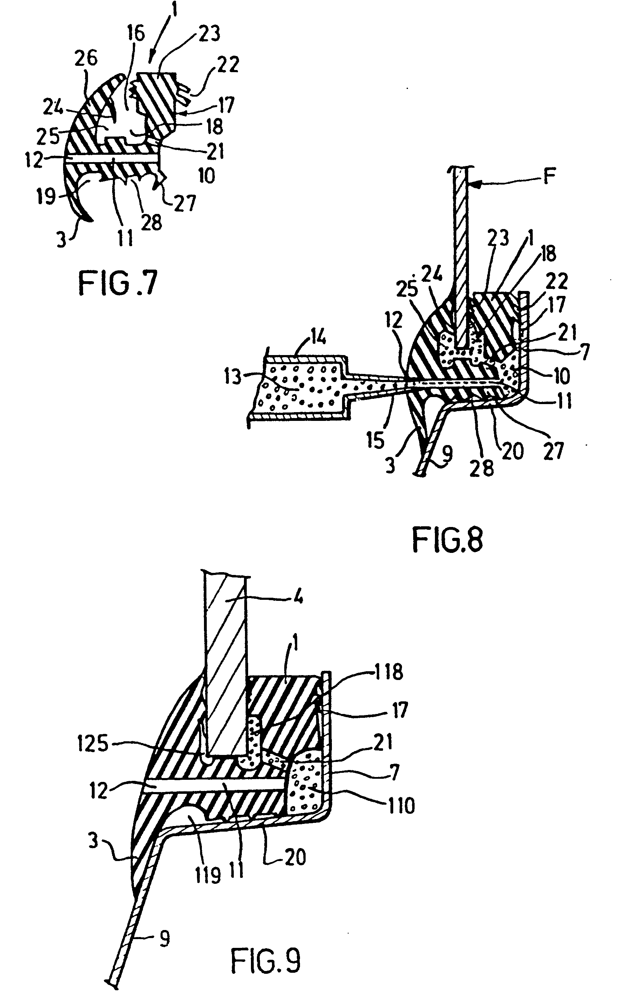

Selon les divers modes de réalisation de l'invention représentés sur les figures 4 à 9, le joint de pare-brise 1 en élastomère présente en section une rainure d'étanchéité 10 ouverte sur l'angle intérieur du rebord 7, c'est-à-dire l'angle formé par le rebord 7 et le pourtour de baie, et cette rainure 10 est reliée par un passage 11 à un ajutage 12 de remplissage sous pression de la rainure avec un adhésif liquide 13 mis sous pression par un moyen de remplissage tel qu'un tune de remplissage 14 à canule 15 engagée dans l'ajutage 12 (voir figs 7, 8 et 9).

La vitre du pare-brise 4 est engagée dans une rainure de pare-brise 16 (voir la figure 7) et ainsi chaussée du joint 1, elle vient presser la face latérale 17 du joint 1 sur le rebord 7. Pour assurer la fixation et l'étanchéité du joint 1 sur le rebord 7, il suffit alors d'injecter sous pression (voir les figures 8 et 9) à partir du ou des ajutages 12, un adhésif 13 dans la chambre étanche 110 fermée par la rainure 10 et le rebord 7. Après séchage ou polymérisation de cet adhésif 13, le joint 1 est fixé fermement et de façon étanche au rebord 7 et à l'angle de carrosserie 9 et la lèvre de rebord 3 vient se rabattre esthétiquement sur la carrosserie 9.

Selon le mode de réalisation de la figure 5, le passage 11 débouche dans une chambre de pare-brise 118 ménagée entre le fond de la rainure de pare-brise 16 (voir la figure 7) et la périphérie du pare-brise. Selon le mode de réalisation de la figure 6, le passage 11 est relié en plus à une rainure complémentaire 19 d'étanchéite et de fixation sur une face 20 du rebord 7. La vitre 4 est ainsi maintenue plus fermement et de façon plus étanche dans la rainure de pare-brise 16 et le joint 1 est fixé par deux bandes collées sur le rebord de la baie 7.

Pour faciliter la pénétration de l'adhésif dans les chambres 110, 118 et 119 à partir des ajutages 12 que l'on peut avantageusement prévoir à raison d'un par côté de pare-brise, c'est-à-dire généralement au nombre de 4, les rainures 10 et 19 et la chambre 118 sont reliées à l'extérieur par des évents disposés sensiblement à équidistance des ajutages 12 et de section plus faible que le passage 11. En effet, au cours du remplissage des rainures avec l'adhésif 13, ces évents sont parcourus par l'air refoulé par l'adhésif.

Le joint de pare-brise plus élaboré dont la section est représentée sur la figure 7, présente un passage 21 reliant la rainure 10 à la chambre de pare-brise 118 et différentes lèvres d'étanchéité. La face latérale 17 plaquée sur le rebord 7 comporte deux lèvres 22 en forme de lamelles et la face de la rainure de pare-brise 16 opposée à cette face 17 présente de petites lèvres d'étanchéité 23 sur la face intérieure de la vitre de pare-brise 4. L'autre face de la rainure 16 comporte une grande lèvre d'étanchéité 24 qui délimite une chambre latérale complémentaire 125.

Sur la face intérieure de la section du joint telle que représentée sur la figure 7, on voit qu'il est prévu une lèvre extérieure de recouvrement et denjolivage 3, une lèvre 27 de fermeture de la rainure 10 et un jeu de petites lèvres 28 d'étanchéité sur la face 20 du rebord 7. La figure 8 représente le joint 1 de la figure 7 en position sur le rebord 7 avec la vitre 4 engagée dans la rainure de pare-brise 16 au moment où l'on procède à l'injection de l'adhésif dans le passage 11 à l'aide d'une canule 15 engagée dans l'ajutage 12. On voit que les lèvres 22, 23 et 27 viennent fermer de façon étanche par application sur la paroi du rebord 7, la rainure 10 et la chambre de pare-brise 118 pour retenir l'adhésif liquide 13. La montée en pression de l'adhésif 13 par pressurisation du tube ou du récipient de remplissage 14 l'oblige à remplir les chambres 110 et 118 jusqu'aux évents. Dans le cas où la dose d'adhésif est prédéterminée, les légères variations de volume de l'ensemble des chambres 110 et 118 est compensée par l'élasticité du matériau élastomère du joint 1 et les lèvres 22, 27 et 28 restent fermement en contact avec la paroi du rebord de la baie 7 sous l'action de la pression exercée vers l'intérieur du véhicule sur la vitre de pare-brise 4. Cette pression sur la vitre 4 est maintenue pendant toute la durée de l'injection et du séchage de l'adhésif 13.

Dans le cas de la réparation d'un pare-brise équipé du joint 1 après rupture du pare-brise, il est nécessaire de nettoyer la paroi du rebord 7 des restes d'adhésif 13 généralement à l'aide d'un tissu abrasif et/ou par raclage. On peut ensuite chausser la périphérie d'un pare-brise neuf avec le joint 1 et présenter celui-ci sur la paroi du rebord 7 en exerçant par tout moyen adéquat une pression sur la vitre 4 en direction de l'intérieur du véhicule. Il suffit ensuite d'introduire dans l'ajutage 12 la canule 15 d'un tube d'adhésif 14 et de presser ce tube pour remplir les chambres 110, 118, et éventuellement 119, d'adhésif. Si l'on ne dispose pas de moyens accélérateurs de séchage de l'adhésif, on pourra compenser ces moyens accélérateurs par un séchage de longue durée en maintenant la pression sur le pare-brise 4 pour obtenir une bonne adhérence entre le joint 1 et la paroi du rebord 7.

Selon une variante de réalisation dans laquelle la canule 15 pénètre par le passage 11 directement dans la rainure 10, on peut prévoir dans cette canule 15 deux ouvertures latérales reliées à un passage central et débouchant chacune en face de l'un des côtés de la rainure 10.

Le joint 1 et le procédé de fixation du pare-brise 4 sur le rebord de la baie 7 sont applicables à l'obturation d'une ouverture de relativement grande dimension par une vitre ou une plaque d'obturation quelconque chaque fois qu'une bonne adhérence et une bonne étanchéité est exigée avec de grandes facilités de montage.

Le joint de pare-brise selon l'invention satisfait aux normes de sécurite les plus exigeantes et notamment aux normes des Etats Unis d'Amérique.

## Revendications

1. Joint de fixation et d'étanchéité d'une plaque, en particulier du pare-brise d'un véhicule automobile, dans sa baie de réception à rebord périphérique (7), du type dans lequel le joint (1) en matériau élastomère dont la surface extérieure correspond à celle du rebord de baie est collé au rebord de la baie par un adhésif (13) approprié lorsque le joint (1) et le pare-brise (6) qu'il porte sont appliqués sur le rebord de la baie, ledit joint comportant sur toute sa périphérie une rainure de pare-brise (16), qui vient s'engager élastiquement autour du bord périphérique du pare-brise (4), ainsi qu'une rainure d'étanchéité et de fixation (10) caractérisé en ce que ladite rainure d'étanchéité et de fixation (10) est ouverte en position de montage du joint sur le rebord (7) sur l'angle formé par le rebord (7) et le pourtour de baie, et en ce que cette rainure (10) est reliée par au moins un trou de passage (11) de remplissage à au moins un ajutage d'injection (12) de remplissage sous pression de la rainure d'étanchéité (10) avec une colle ou autre adhésif liquide équivalent (13) pour le collage étanche du joint (1) sur le rebord (7), pour assurer son maintien en position par rapport au rebord (7) de la baie après séchage de l'adhésif (13) qui est venu remplir la rainure d'étanchéité (10).

2. — Joint selon la revendication 1, caractérisé en ce que la rainure d'étanchéité (10) est reliée par au moins un passage, au fond de la rainure de pare-brise pour permettre le remplissage par l'adhésif (13) de l'espace (18) resté libre entre le fond de cette rainure (16) et le bord périphérique du pare-brise (4) au moment du remplissage de la rainure d'étanchéité (10).

3. — Joint selon la revendication 2, caractérisé en ce que la liaison entre la rainure d'étanchéité (10) et le fond de la rainure da pare-brise (16) est constituée par la dérivation du trou de remplissage (11) ou le passage de celui-ci dans le fond de la rainure de pare-brise (16).

4. — Joint selon l'une des revendications 1 à 3, caractérisé en ce qu'il comporte sur toute sa périphérie une rainure complémentaire (19) d'étanchéité et de fixation qui est, d'une part, ouverte sur la péripheérie du joint (1) au voisinage d'une face (20) de l'angle de la section du rebord (7) de la baie ouvert vers l'extérieur et, d'autre part, reliée à la rainure d'étanchéité (10) et/ou trou de remplissage (11) pour recevoir un remplissage d'adhésif (13) au cours du remplissage de la rainure d'étanchéité (13).

5. — Joint selon l'une des revendications 1 à 4, caractérisé en ce qu'à chaque trou ou passage de remplissage (11) correspond au moins un évent de sortie de l'air contenu dans la ou les rainures et refoulé par le remplissage de ces rainures avec l'adhésif (13).

6. — Joint selon l'une des revendications 1 à 5, caractérise en ce qu'il comportre sur toute sa périphérie et sur chacune des deux faces des rainures ouvertes en direction du rebord de la baie, au moins une lèvre d'étanchéité (22, 27) susceptible de s'appliquer sur ce rebord (7) pour délimiter dans la rainure (10) en coopération avec la surface de ce rebord (7) une chambre relativement étanche et apte à retenir l'adhésif (13) sous pression au moment de son injection.

7. — Joint selon l'une des revendications 1 à 6, caractérisé en ce que la rainure de pare-brise (16) comporte sur chacune de ses faces en contact avec la vitre de pare-brise au moins une lèvre d'étanchéité (23, 24), susceptible de coopérer avec le pare-brise (4) et le fond de la rainure de pare-brise (16) pour délimiter une chambre d pare-brise (18) relativement étanche et apte à retenir l'adhésif sous pression (13) au moment de son injection.

8. — Procédé de fixation et d'étanchéité d'une plaque telle qu'un pare-brise de véhicule automobile dans une baie de réception à rebord périphérique utilisant un joint périphérique fermé sur lui-même tel que celui décrit dans l'une des revendications 1 à 7, caractérisé en ce que l'on entoure la périphérie du pare-brise (4) par le joint (1) en disposant le pare-brise (4) dans la rainure de pare-brise (16) et l'on plaque le joint (1) sur le rebord (7) de pare-brise pour former les chambres à adhésif (110-118-119) délimitées par les rainures (10, 16) de joint (1) puis l'on introduit une canule ou un embout (15) d'injection d'adhésif (13) dans l'ajutage d'injection (12) et l'on injecte par cet embout (15) une quantité d'adhésif (13) prédéterminée remplissant la ou les chambres à adhésif (110-118-119) et enfin l'on maintient le joint (1) plaqué sur le rebord (7) de pare-brise jusqu'au séchage de l'adhésif (13).

## Patentansprüche

1. Leiste zum Befestigen und Dichten von einer Scheibe, insbesondere von einer Windschutzscheibe, in der mit einem Umfangsrand (7) versehenen Fensteröffnung eines Kraftfahrzeuges, wobei die Leiste (1) aus einem Elastomer, deren Außenfläche dem Fensteröffnungsrand entspricht, an dem Fensteröffnungsrand mittels eines geeigneten Klebers (13) geklebt ist, während die Leiste (1) und die von ihr gehaltene Windschutzscheibe (4) gegen den Fensteröffnungsrand gedrückt werden und wobei die Leiste entlang ihres gesamten Umfangs eine Windschutzscheibennut (16) aufweist, die elastisch am Umfangsrand der Windschutzscheibe (4) anliegt, sowie eine Dichtungs- und Befestigungsnut (10) aufweist, dadurch gekennzeichnet, daß die Dichtungs- und Befestigungsnut (10) in Montagestellung der Leisten am Rand (7) zum Winkel zwischen dem Rand (7) und dem Fensteröffnungsrand hin offen ist und daß diese Nut (10) über wenigstens eine Füllöffnung (11) mit wenigstens einem Einfüllstutzen (12) verbunden ist zum Einpressen eines Klebers oder eines anderen gleichwertigen flüssigen Bindemittels (13) in die Dichtungsnut (10) um die Leiste (1) am Rand (7) dicht zu verkleben und um ihr Halten bezüglich des Fensteröffnungsrandes (7) nach dem Trocknen des Bindemittels (13) zu gewährleisten, das die Dichtungsnut (10) ausfüllt.

2. Leiste nach Anspruch 1, dadurch gekennzeichnet, daß die Dichtungsnut (10) über wenigstens einen Durchlaß mit dem Boden der Windschutzscheibennut verbunden ist um ein Füllen des freigelassenen Raums (18) zwischen dem Boden dieser Nut (16) und dem Umfangsrand der Windschutzscheibe (4) während des Füllens der Dichtungsnut (10) mit Kleber (13) zu ermöglichen.

3. Leiste nach Anspruch 2, dadurch gekennzeichnet, daß die Verbindung zwischen der Dichtungsnut (10) und dem Boden der Windschutzscheibennut (16) aus einer Ableitung der Füllöffnung (11) oder einer Verbindung von ihr mit dem Boden der Windschutzscheibennut (16) besteht.

4. Leiste nach einem der Ansprüche 1 bis 3, dadurch gekennzeichnet, daß sie entlang ihres gesamten Umfangs eine zusätzliche Dichtungs- und Befestigungsnut (19) aufweist, die einerseits zum Umfang der Leiste (1) in der Nähe einer Fläche (20) des Querschnittswinkels des Randes (7) der nach außen hin offenen Fensteröffnung offen ist und andererseits mit der Dichtungsnut (10) und/oder der Füllöffnung (11) verbunden ist um während des Füllens der Dichtungsnut mit Bindemittel gefüllt zu werden.

5. Leiste nach einem der Ansprüche 1 bis 4, dadurch gekennzeichnet, daß jedem Fülloch oder Füllöffnung (11) wenigstens eine Luftauslaßöffnung entspricht, die in der oder den Nuten vorgesehen sind zum Entlüften während des Füllens der Nuten mit Bindemittel (13).

6. Leiste nach einem der Ansprüche 1 bis 5, dadurch gekennzeichnet, daß sie entlang ihres gesamten Umfangs und auf jeder der beiden Seiten der offenen Nuten in Richtung zum Fensteröffnungsrand wenigstens eine Dichtlippe (22, 27) aufweist, die sich an den Rand (7) anlegen kann um in der Nut (10) in Zusammenwirkung mit der Oberfläche des Randes (7) eine relativ dichte Kammer zu formen zur Aufnahme des während seines Einspritzens unter Druck stehenden Bindemittels (13).

7. Leiste nach einem der Ansprüche 1 bis 6, dadurch gekennzeichnet, daß die Windschutzscheibennut (16) auf jeder ihrer mit der Scheibe der Windschutzscheibe in Berührung stehenden Fläche wenigstens eine Dichtlippe (23, 24) aufweist, die mit der Windschutzscheibe (4) und dem Boden der Windschutzscheibennut (16) zusammenwirken kann um so eine relativ dichte Windschutzscheibenkammer (18) zu formen zur Aufnahme des während seines Einspritzens unter Druck stehenden Bindemittels (13).

8. Verfahren zur Befestigung und zum Abdichten einer Scheibe, wie z.B. einer Windschutzscheibe eines Kraftfahrzeuges in einer Fensteröffnung mit Umfangsrand unter Verwendung einer in sich geschlossenen Umfangsleiste gemäß einem der Ansprüche 1 bis 7, dadurch gekennzeichnet, daß der Umfang der Windschutzscheibe (4) mit der Leiste (1) umgeben wird, wobei die Windschutzscheibe (4) in die Windschutzscheibe (16) eingesetzt wird, daß die Leiste (1) auf den Windschutzscheibenrand (7) aufgesetzt wird um so Klebstoffkammern (110, 118, 119) zu bilden, die von den Nuten (10, 16) der Leiste (1) begrenzt sind, daß eine Kanüle oder eine Einspritzöse (15) für den Klebstoff (13) in den Einfüllstutzen (12) eingeführt wird und daß über diese Öse (15) eine vorgegebene Menge Bindemittel (13) eingespritzt wird, das die Kammer oder die Kammern (110, 118, 119) mit Bindemittel füllt und daß schließlich die auf den Rand (7) der Windschutzscheibenöffnung aufgedrückte Leiste bis zum Trocknen des Bindemittels (13) gehalten wird.

## Claims

1. A joint for fixing and sealing a sheet member, in particular the windscreen of a motor vehicle, in its receiving opening having a peripheral rim (7) of the type in which the joint (1) of elastomer material whose outside surface corresponds to that of the rim of the opening is glued to the rim of the opening by a suitable adhesive (13) when the joint (1) and the windscreen (4) that it carries are applied to the rim of the opening, said joint comprising over its entire periphery a windscreen groove (16) which engages resiliently around the peripheral edge of the windscreen (4), and a sealing and fixing groove (10), characterised in that said sealing and fixing groove (10) is open in the position of fitting of the joint on the rim (7) to the angle formed by the rim (7) and the periphery of the opening, and that said groove (10) is connected by at least one filling flow hole (11) to at least one injection aperture (12) for filling the sealing groove (10) under pressure with a glue or other equivalent liquid adhesive (13) for sealingly glueing the joint (1) to the rim (7) to ensure that it is held in position with respect to the rim (7) ot the opening after drying of the adhesive (13) which has filled the sealing groove (10).

2. A joint according to claim 1 characterised in that the sealing groove (10) is connected by at least one passage to the bottom of the windscreen groove to permit adhesive (13) to fill the space (18)which has remained free between the bottom of said groove (16) and the peripheral edge of the windscreen (4) at the moment of filling the sealing groove (10).

3. A joint according to claim 2 characterised in that the connection between the sealing groove (10) and the bottom of the windscreen groove (16) is formed by a branch portion of the filling hole (11) or the passage thereof into the bottom of the windscreen groove (16).

4. A joint according to one of claims 1 to 3 characterised in that it comprises over the entire periphery thereof a complementary sealing and fixing groove (19) which is on the one hand open to the periphery of the joint (1) in the vicinity of a face (20) of the angle of the section of the rim (7) of the receiving opening, which is open towards the exterior, and, on the other hand, connected to the sealing groove (10) and/ or to the filling hole (11) to receive a filling of adhesive (13) in the course of the step of filling the sealing groove (10).

5. A joint according to one of claims 1 to 4 characterised in that corresponding to each filling hole or passage (11) is at least one vent for discharge of the air which is contained in the groove or grooves and which is displaced by the step of filling said grooves with adhesive (13).

6. A joint according to one of claims 1 to 5 characterised in that it comprises over the entire periphery thereof and on each of the two faces of the grooves which are open in the direction of the rim of the receiving opening, at least one sealing lip (22, 27) which is capable of bearing against said rim (7) to define in the groove (10), in co-operation with the surface of said rim (7), a relatively sealed chamber which is capable of retaining the adhesive (13) under pressure at the moment of injection thereof.

**0079839**

7. A joint according to one of claims 1 to 6 characterised in that the windscreen groove (16) comprises on each of the faces thereof in contact with the windscreen glass, at least one sealing lip (23, 24) capable of co-operating with the windscreen (4) and the bottom of the windscreen groove (16) to define a relatively sealed windscreen chamber (18) capable of retaining the adhesive under pressure (13) at the moment of injection thereof.

8. A process for fixing and sealing a sheet member such as a motor vehicle windscreen in a receiving opening having a peripheral rim using a peripheral joint which is closed on itself as set forth in one of claims 1 to 7 characterised in that the periphery of the windscreen (4) is surrounded by the joint (1) by disposing the windscreen (4) in the windscreen groove (16) and the joint (1) is pressed against the windscreen rim (7) to form the adhesive chambers (110—118—119) defined by the grooves (10, 16) of the joint (1), then a nozzle or an end portion (15) for the injection of adhesive (13) is introduced into the injection aperture (12), and a predetermined amount of adhesive (13) is injected through said end portion (15) to fill the adhesive chamber or chambers (110—118—119) and finally the joint (1) is held pressed against the windscreen rim (7) until the adhesive (13) dries.

FIG.1

FIG.2

FIG.3

FIG.4

FIG.5

FIG.6

FIG.7

FIG.8

FIG.9